(19) Europäisches Patentamt
European Patent Office
Office européen des brevets

(11) Veröffentlichungsnummer: **0 275 865 B1**

# (12) EUROPÄISCHE PATENTSCHRIFT

(45) Veröffentlichungstag der Patentschrift: **07.10.92**

(51) Int. Cl.[5]: **A01N 25/18**, A01N 59/26, A01N 25/26

(21) Anmeldenummer: **88100021.0**

(22) Anmeldetag: **04.01.88**

## (54) Phosphorwasserstoff entwickelnde Schädlingsbekämpfungsmittel mit regelbarer Feuchtigkeitsdurchlässigkeit und Ausgasungsverfahren.

(30) Priorität: **05.01.87 DE 3700176**

(43) Veröffentlichungstag der Anmeldung:
**27.07.88 Patentblatt 88/30**

(45) Bekanntmachung des Hinweises auf die Patenterteilung:
**07.10.92 Patentblatt 92/41**

(84) Benannte Vertragsstaaten:
**CH DE FR GB GR LI**

(56) Entgegenhaltungen:
**DE-A- 2 443 333** **DE-A- 2 634 237**
**DE-A- 2 643 814** **DE-B- 1 122 762**
**DE-B- 1 155 631** **FR-A- 1 531 677**

(73) Patentinhaber: **DETIA FREYBERG GMBH**
**Dr.-Werner-Freyberg-Str. 11**
**6947 Laudenbach/Bergstrasse(DE)**

(72) Erfinder: **Friemel, Wolfgang, Dr. Dipl.-Chem.**
**Giessener Strasse 4**
**W-6148 Heppenheim(DE)**
Erfinder: **Barth, Volker, Dr. Dipl.-Chem.**
**An der Bleiche 1**
**W-6700 Ludwigshafen 29(DE)**
Erfinder: **Dierks, Hildegund**
**Bullauer Strasse 22**
**W-6120 Erbach/BRD(DE)**

(74) Vertreter: **Weinhold, Peter, Dr. et al**
**Patentanwälte Dr. V. Schmied-Kowarzik**
**Dipl.-Ing. G. Dannenberg Dr. P. Weinhold Dr.**
**D. Gudel Dipl.-Ing. S. Schubert Dr. P. Barz**
**Siegfriedstrasse 8**
**W-8000 München 40(DE)**

EP 0 275 865 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Phosphorwasserstoff entwickelndes Schädlingsbekämpfungsmittel auf der Grundlage von Erdalkali- oder Erdmetallphosphiden und gegebenenfalls Zusatzstoffen, das einen festen organischen Polymer-Überzug zur Verzögerung der Ausgasung aufweist. Ferner bezieht sich die Erfindung auf ein Verfahren zur Verzögerung des Beginns der Ausgasung von Phosphorwasserstoff-entwickelnden Schädlingsbekämpfungsmitteln.

Es sind Schädlingsbekämpfungsmittel fester Konsistenz bekannt, die an der Luft langsam gasförmige Bestandteile abgeben. Solche Schädlingsbekämpfungsmittel können aus hydrolisierbaren Erdalkali- und/oder Erdmetallphosphiden, insbesondere auf der Basis von Aluminium- und Magnesiumphosphid, bestehen, die unter dem Einfluß von Luft- bzw. Lagergutfeuchtigkeit Phosphorwasserstoff entwickeln. Derartige Schädlingsbekämpfungsmittel werden beispielsweise zur Bekämpfung von Schädlingen, wie z.B. Käfern, Würmern, Schaben oder sonstigen Insekten, z.B. in Transportmitteln, Lagerhäusern, Silos oder anderen Aufbewahrungs- bzw. Transporteinrichtungen für beispielsweise Getreide, Hülsenfrüchte, Nüsse, Kakaobohnen, Tabak oder anderen Nahrungs- bzw. Genußmitteln eingesetzt. Mit dem erfindungsgemäßen Schädlingsbekämpfungsmittel können aber auch Nagetiere, wie Mäuse und Ratten, bekämpft werden.

Diese Schädlingsbekämpfungsmittel haben sich gegenüber anderen Begasungsmitteln, wie Methylbromid, Ethylendibromid und Ethylenoxid in den letzten 10 bis 20 Jahren mehr und mehr durchgesetzt. Dies liegt einerseits an den günstigen Eigenschaften des Phosphorwasserstoffs; er verändert in keiner Weise die Qualitätsmerkmale der begasten Güter, dringt schnell bis ins Innere, z.B. bei Getreide in die Körner ein und vernichtet dort tierische Organismen mitsamt ihren Entwicklungsstadien. Er verschwindet aber ebenso Schnell wieder durch die an die Begasung anschließende Lüftung. Andererseits ist die Anwendung relativ einfach, da die Produkte z.B. in Form von Preßkörpern, wie Tabletten und Pellets, entweder dem Getreidestrom beigemischt werden, oder auf dem Fußboden von beispielsweise Lagerhallen ausgelegt werden. Derartige Schädlingsbekämpfungsmittel können aber auch z.B. als pulverförmige Zusammensetzungen in Beutel aus speziellem Papier oder geeignetem Vliesstoff gefüllt und in das Lagergut eingebracht werden. Das Schädlingsbekämpfungsmittel sollte dann den durch Hydrolyse entstehenden Phosphorwasserstoff durch die Wände des Beutels nach außen entlassen. Eine weiter entwickelte Anwendemethode für das Begasungsverfahren besteht in der Verwendung eines Bandes mit einer Vielzahl von Taschen zur direkten Aufnahme des Schädlingsbekämpfungsmittels oder von Beuteln, die dieses enthalten.

Obwohl bei Phosphorwasserstoff entwickelnden Schädlingsbekämpfungsmitteln im allgemeinen entgegen der Anwendung von anderen Gasen keine Gasmasken getragen werden müssen, entstehen - insbesondere bei höheren Temperatur- und Feuchtigkeitsgraden - schon während der Ausbringung meßbare Phosphorwasserstoffkonzentrationen.

Im Zuge eines immer stärkeren Umweltbewußtseins, stößt diese Tatsache auf wachsende Kritik, da der Phosphorwasserstoff auch für Menschen und höhere Tiere hochtoxisch ist.

Dies hat dazu geführt, daß in einigen Ländern oder in Teilen dieser Länder Arbeitnehmerorganisationen die Anwendung der Phosphorwasserstoff entwickelnen Vorratsschutzmittel ihren Mitgliedern untersagen, nicht zuletzt deswegen, weil in der zurückliegenden Zeit einige Unfälle mit fatalem Ausgang zu beklagen waren.

Um die starke Feuchtigkeitsempfindlichkeit beim Handhaben, Verpacken und Ausbringen der oben genannten Mittel abzumildern, war schon früher versucht worden (DP 1 122 762), die einzelnen Phosphidpartikel mit einem Überzug von insbesondere Hartparaffin vollständig zu umhüllen. Um bei der Anwendung der Umgebungsfeuchtigkeit den Zugang zu den Phosphidpartikeln zu ermöglichen, hielt man es für notwendig, ein Sprengmittel wie Ammoniumcarbamat zuzusetzen. Trotzdem war es in der Praxis nicht möglich, eine Verzögerung der Phosphinausgasung in geregelter Weise zu erreichen.

Kurze Zeit vor dem Anmeldetag der DE-PS 11 22 762 hatte dieselbe Anmelderin bereits das deutsche Gebrauchsmuster 18 29 597 angemeldet, welches einen Formkörper oder Teilchen aus Metallphosphiden betrifft, die oberflächlich mit einem dünnen Überzug eines wasserabweisenden Stoffes versehen sind. Die dafür in Betracht kommenden Stoffe sind außerordentlich breit definiert und umfassen natürliche und synthetische Harze und Wachse, Silikone, Paraffin und dergleichen. Lediglich bei speziellen Ausführungsformen ist vorgesehen, daß die Formkörper noch einen in der Wärme gasentwickelnden Stoff enthalten, der offenbar als "Sprengmittel" wirken kann. Es hat sich nun herausgestellt, daß die Lehre dieses Gebrauchsmuster in der gegebenen Form nicht reproduzierbar ist. Insbesondere kann man zumindest dann nicht auf ein Sprengmittel verzichten, wenn nicht hinsichtlich der für den Überzug vorgesehenen Materialien eine ganz spezielle Auswahl getroffen wird.

Es wurde auch vorgeschlagen, sehr langsam verdunstende Stoffe, wie p-Dichlorbenzol, Campher, Metaldehyd und Paraformaldehyd mit dem Phosphid zu vermischen und zu Tabletten zu verpressen (DP 1

155 631), um eine verlangsamte Gasentwicklung zu erreichen.
Abgesehen davon, daß wegen des Fehlens eines dichten Überzuges die an der Außenseite der Tabletten vorhandenen Phosphidteilchen sofort anfangen,Gas abzuspalten und die vorgenannten Bedenken somit nicht gegenstandslos werden, sind die vorgeschlagenen Substanzen durchwegs toxisch.
So wird z.B. Metaldehyd als Gift zur Schneckenbekämpfung eingesetzt.

Für die Behandlung von Lebensmitteln, wie Getreide, Nüsse oder Kakaobohnen,sind diese Substanzen daher völlig ungeeignet.

Aufgabe der Erfindung ist daher die Schaffung eines Schädlingsbekämpfungsmittels auf der Grundlage von Erdalkali- oder Erdmetallphosphiden und gegebenenfalls Zusatzstoffen, bei dem die Freisetzung von Phosphin geregelt und insbesondere so lange verzögert werden kann, bis keine Gefahr der Schädigung der das Schädlingsbekämpfungsmittel anwendenden Personen mehr besteht. Dabei soll es möglich sein, je nach den Bedingungen des Anwendungsortes den Beginn der Ausgasung mehr oder weniger stark, gegebenenfalls sogar um mehrere Wochen, zu verzögern und auf diese Weise eine absolute Sicherheit zu gewährleisten. Nach einem anderen Aspekt der Erfindung soll also ein Verfahren zur Verzögerung des Beginns der Ausgasungszeit von Phosphorwasserstoff-entwickelnden Schädlingsbekämpfungsmitteln je nach den jeweils vorliegenden Erfordernissen oder Wünschen des Anwenders geschaffen werden. Diese Ziele sollen auch ohne die Anwendung eines speziellen Sprengmittels erreichbar sein.

Ferner soll der Beginn der Ausgasung von der Umgebungstemperatur und der auf das Schädlingsbekämpfungsmittel einwirkenden Feuchtigkeit möglichst wenig beeinflußt werden und insbesondere soll das Schädlingsbekämpfungsmittel gegenüber der Einwirkung von flüssigem Wasser möglichst unempfindlich sein und insbesondere nicht zur Selbstentzündung neigen.

Im allgemeinen soll jedoch keine Notwendigkeit bestehen, die gewohnten Anwendungsbedingungen von bekannten Phosphorwasserstoff entwickelnden Schädlingsbekämpfungsmitteln wesentlich zu verändern

Gegenstand der Erfindung ist ein Phosphorwasserstoff entwickelndes Schädlingsbekämpungsmittel auf der Grundlage von Erdalkali- oder Erdmetallphosphiden und gegebenenfalls Zusatzstoffen, das einen festen organischen Polymer-Überzug zur Verzögerung der Ausgasung aufweist, das dadurch gekennzeichnet ist, daß der auf das Schädlingsbekämpfungsmittel in der zu verwendenden Form nachträglich aufgebrachte, gegen flüssiges Wasser unempfindliche Überzug, der eine Dicke von 0,01 bis 3 mm aufweist, den Phosphorwasserstoff entwickelnden Stoff bzw. die Phosphorwasserstoff entwickelnde Zusammensetzung vollständig umhüllt und daß über die Zusammensetzung und/oder die Dicke des Überzugs dessen Feuchtigkeitsdurchlässigkeit und damit der Zeitpunkt seines Aufbrechens (des Beginns der Ausgasung) geregelt ist.

Ein weiterer Gegenstand der Erfindung ist ein Verfahren zur Verzögerung des Beginns von Ausgasung von Phosphorwasserstoffentwickelnden Schädlingsbekämpfungsmitteln auf der Grundlage von Erdalkali- oder Erdmetallphosphiden und gegebenenfalls Zusatzstoffen mit einem Überzug zur Verzögerung der Ausgasung, das dadurch gekennzeichnet ist, daß man das in Form von Preßkörpern, vorzugsweise von regelmäßiger Form und mit abgerundeten Kanten, als Granulat, oder als Pulver vorliegende Schädlingsbekämpfungsmittel nachträglich mit einem 0,01 bis 3 mm dicken, gegen flüssiges Wasser empfindlichen Überzug aus einem festen, organischen Polymer vollständig umhüllt, wobei man die Feuchtigkeitsdurchlässigkeit des Überzugs und damit den Zeitpunkt seines Aufbrechens (des Beginns der Ausgasung) über dessen Zusammensetzung und/oder Dicke regelt, und man das Schädlingsbekämpfungsmittel dann in an sich bekannter Weise Ausgasungsbedingungen unterwirft.

Das Fehlen von scharfen Kanten,von Löchern in der Oberfläche oder von herausragenden Spitzen bei den zu beschichtenden Preßkörpern erleichtert es, einen möglichst gleichförmigen Überzug mit einheitlicher Dicke zu erreichen und damit Unregelmäßigkeiten bei der Phosphinentwicklung zu vermeiden.

Als Erdmetall- bzw. Erdalkaliphosphid wird vorzugsweise Aluminium- bzw. Magnesiumphosphid verwendet.

Da die gewünschte Verzögerung durch Überziehen des Phosphorwasserstoff entwickelnden Stoffes bzw. der Phosphorwasserstoff entwickelnden Zusammensetzung mit bestimmten feuchtigkeitsdurchlässigen, festen, organischen Polymeren auch ohne Sprengmittel erreicht werden kann, brauchen die erfindungsgemäßen Schädlingsbekämpfungsmittel kein Sprengmittel zu enthalten. Wenn in den bekannten Schädlingsbekämpfungsmitteln ein Sprengmittel im Überzug enthalten war, hatte dieses allgemein den Nachteil, daß Löcher und Unregelmäßigkeiten des Überzugs entstanden. Dieses kann nun erfindungsgemäß vermieden werden.

Der Überzug enthält mindestens eine polymere Komponente. Diese ist z.B. ein Acrylharz, insbesondere ein Polymer auf der Grundlage von Acrylsäure bzw. Acrylsäurederivat(en). Bevorzugt wird ein Acrylsäureester/Methacrylsäureester-Copolymer, insbesondere mit 1 bis 4 Kohlenstoffatomen in der Estergruppe, wobei die Estergruppe mit einem oder mehreren als Salz vorliegenden Ammoniumgruppen

substituiert sein kann. Besonders bevorzugt ist ein organisches Material, das die folgenden wiederkehrenden Einheiten aufweist:

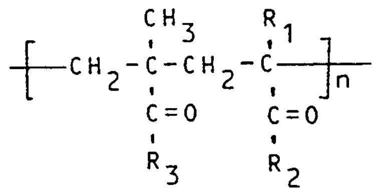

worin $R_1$ Wasserstoff oder $C_{1-4}$-Alkyl, insbesondere Methyl bedeutet, $R_2$ $C_{1-4}$-Alkoxy, insbesondere Methoxy oder Ethoxy ist, $R_3$ Hydroxyl oder eine Alkoxygruppe, die eine tertiäre oder eine quarternäre Ammoniumgruppe mit $C_{1-4}$-Alkylsubstituenten, gegebenenfalls in Form eines Säureadditionssalzes mit einem geeigneten Anion aufweisen kann, repräsentiert und n für einen Wert steht, der dem Copolymer ein mittleres Molekulargewicht vom 50 000 bis 500 000 vermittelt.

Durch einen variierenden Anteil an Ammoniumgruppen im Polymerisat kann der Grad der Feuchtigkeitsdurchlässigkeit des Überzugs beeinflußt werden.

Bei speziellen Ausführungsformen des erfindungsgemäß verwendeten Filmbildners haben die oben genannten Substituenten die folgende Bedeutung:

$R_1$ = Methyl oder Wasserstoff
$R_2$ = Methoxy oder Ethoxy

$R_3$ = 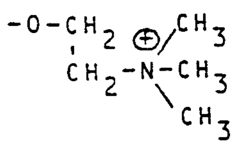 I $\frac{1}{m}$ $X^{\ominus m}$

wobei $X^{-m}$ ein Anion bedeutet, bei dem m für einen Wert von 1-3 stehen kann
oder
$R_1$ = Wasserstoff oder Methyl
$R_2$ = Methoxy oder Butoxy

$R_3$ = 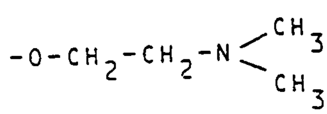 II

oder
$R_1$ = Methyl
$R_2$ = Methoxy
$R_3$ = Hycroxyl und $OCH_3$, wobei das Verhältnis von OH:$OCH_3$ in Bereich von 1:1 bis 1:2 liegt.

Selbstverständlich kann der Überzug auch Mischpolymerisate oder Mischungen von den oben genannten Polymeren oder allen nachstehend angegebenen Materialien enthalten bzw. aus diesen bestehen.

Nach anderen Ausführungsformen wird als Filmbildner z.B. ein Styrolharz, insbesondere ein Styrol-MaleinsäureanhydridCopolymer, ein Cellulosederivat, insbesondere ein Celluloseester, wie Celluloseacetat, Cellulose-acetat-phthalat Cellulosemethylphthalat, Polyvinylacetat und/oder Polyvinylacetatphthalat verwendet. Ferner kann als organisches Polymer Kolophonium, vorzugsweise in Kombination mit einem Antiklebemittel,und/oder eine gegebenenfalls substituierte Alkylcellulose oder deren Ester, z.B. Hydroxylpropylmethylcellulose oder das entsprechende Phthalat, gegebenenfalls in Mischung mit Ethylcellulose, verwendet werden.

Zur Herstellung des erfindungsgemäßen Schädlingsbekämpfungsmittels wird das organische Polymer zweckmäßig in geeigneten Lösungsmitteln wie Alkoholen, Ketonen oder Chlorkohlenwasserstoffen gelöst bzw. suspendiert. Die Menge an organischem Material beträgt dabei zwischen 1 und 50 Gew.-%, insbesondere zwischen 2 und 12 Gew.-%, vorzugsweise zwischen 3 und 6 Gew.-% des Lösungsmittels.

Daher werden erfindungsgemäß als Überzugsmaterialien diejenigen bevorzugt, die entsprechend gute Löslichkeitseigenschaften haben.

Die verdünnte Lösung des organischen Polymers wird vorteilhaft auf den Phosphorwasserstoff entwikkelnden Stoff bzw. die Phosphorwasserstoff entwickelnde Zusammensetzung, die in Form vom Preßkörpern, insbesondere mit glatter Oberfläche, einem Granulat oder Pulvern vorliegen, aufgesprüht. Bei Aufbringung des Überzugs auf Pulver kann eine Aggregation der Pulverteilchen bewirkt werden, so daß ein überzogenens Granulat entsteht.

Die Verwendung von Formkörpern wird erfindungsgemäß bevorzugt, weil diese die beste Gewähr für eine Reproduzierbarkeit hinsichtlich des Ausgangsverhaltens gewährleisten.

Dieses Verfahren kann mit handelsüblichen Coatern durchgeführt werden, die einen Kessel von unterschiedlicher Form und Anordnung aufweisen können. Es wird jedoch eine Auftragungsvorrichtung bevorzugt, die auf dem Prinzip eines Wirbelbettes beruht.

Hierbei wird durch Einblasen von Luft z.B. in einen etwa kugelförmigen Kessel eine Verwirbelung des zu überziehenden Materials erreicht. Gleichzeitig wird durch eine Sprühdüse die verdünnte Lösung des organischen Beschichtungsmaterials in das Wirbelbett eingebracht, mit der die Preßkörper oder Pulver behandelt werden. Dabei wird durch den Luftstrom, der vorgewärmt ist, das Lösungsmittel sofort verdampft und es bildet sich ein feiner überzug. Hierbei ist es zweckmäßig,daß nacheinander mehrere Überzugsschichten gebildet werden, was in einem einzigen Arbeitsgang oder absatzweise in mehreren Arbeitsgängen geschehen kann. Das Wirbelbett wird zweckmäßig nach dem Aufbringen des bzw. der Überzüge noch bis zur Trocknung von diesem aufrechterhalten.

Der Gesamtüberzug liegt schließlich zweckmäßig in einer Menge von 1 bis 20 Gew.-%, vorzugsweise von 2,5 bis 15 Gew.-%, bezogen auf das Gesamtgewicht der den Phosphorwasserstoff entwickelnden Zusammensetzung, vor.

Die Geschwindigkeit der Diffusion der Feuchtigkeit aus der Luft oder Umgebung durch diesen Überzug hängt stark von seiner Dicke ab. Allgemein kann der Beginn der Ausgasung umso länger hinausgezögert werden, je dicker der Überzug ist. Die Dicke des Überzugs kann vorzugsweise zwischen 0,02 und 2 mm liegen, wobei der Bereich zwischen 40 und 500 um besonders bevorzugt ist.

Die Feuchtigkeitsdurchlässigkeit des Überzugs beträgt zweckmäßig 20 bis 1000 g Wasser pro $m^2$, vorzugsweise 50 bis 60 g Wasser pro $m^2$ und insbesondere 100 bis 500 g Wasser pro $m^2$ (jeweils bezogen auf 24 Stunden).

Die Feuchtigkeitsdurchlässigkeit von Überzugsmaterialien kann in Anlehnung an das Verfahren nach DIN 53122 gemessen werden. Zur Messung wurden dabei auf einen geeigneten, glatten Träger Überzüge in den gleichen Dicken aufgesprüht, wie sie auf den phosphidhaltigen Preßkörpern angewendet werden.

Eine weitere Möglichkeit der Veränderung des Zeitpunktes des Ausgasungsbeginns besteht in der Änderung der Zusammensetzung des Überzugs, insbesondere in der Zugabe vor hydrophobierenden Zusätzen. Aber auch die Art des Aufbringens des Überzugs kann das Ausgasungsverhalten der erfindungsgemäßen Schädlingsbekämpfungsmittel beeinflussen.

Die Ausgasungszeit, insbesondere die Zeit bis zum Beginn der Ausgasung,kann also bei den erfindungsgemäßen Schädlingsbekämpfungsmitteln je nach Erfordernissen einfach und zuverlässig reguliert werden. Zur Einstellung des gewünschten Ausgasungsverhaltens kann gegebenenfalls ein vorgesehenes Überzugsmaterial durch chemische Modifikation oder durch Vermischen mit einem geeigneten hydrophilen oder hydrophoben Zusatz mit ausreichender Mischbarkeit modifiziert werden. Nachdem die Auswahl des Überzugsmaterials getroffen ist, wird dann eine zweckmäßige Dicke des Überzugs bestimmt, was durch einige routinemäßige Vorversuche unter jeweils identischen Auftragungsbedingungen und Auftragungsmethoden durchgeführt werden kann.

Wenn eine besonders lange Verzögerung der Ausgasung gewünscht wird, kann erfindungsgemäß auch ein organisches Polymer verwendet werden, das ein Acrylharz in Kombination mit Stearin oder Cetylalkohol umfaßt. Vorzugsweise beträgt das Verhältnis von Acrylharz zu Stearin oder Cetylalkohol zwischen 0,5:1 bis 2:1. Der Zusatz von Stearin oder Cetylalkohol bewirkt die Ausgasungsverzögerung in einem solchen hohen Maße, daß von einer synergistischen Wirkungsweise gesprochen werden kann.

Wird zum Beispiel ein Überzug aus 6% Copolymer plus 6% Magnesiumstearat, bezogen auf das Gewicht des Preßkörpers bzw. Pulvers als Überzug aufgebracht, so kann mit einer Verzögerungszeit von ca. 18 Stunden bis zum Aufbrechen des Überzuges gerechnet werden.

Ein Überzug von 6% Stearinsäure allein gab eine Verzögerung von ca. 10 - 20 Stunden.
Wurden jedoch beide in Kombination, also 6% Copolymerisat, 6% Magnesiumstearat und 6% Stearin aufgebracht, so ergab sich eine Verzögerungszeit von bis zu 23 Tagen. Ebenso verhielt es sich bei der Zugabe von Cetylalkohol.

Ferner ist es empfehlenswert, die Abmessungen der Preßkörper zu vergrößern, wenn der Zeitraum bis zum

Beginn der Ausgasung verlängert werden soll, so kann man also beispielsweise Tabletten mit einem Gewicht von 3 g anstelle von 0,6 g schweren Pellets verwenden.

Ein Zusatz von Aluminium- oder Magnesiumstearat oder anderer wasserunlöslicher Metallseifen zu der Überzugszusammensetzung verhindert beim Aufsprühen der Lösung und anschließendem Trocknen das Zusammenkleben der Preßkörper bzw. des Pulvers. Um die Elastizität des Überzugs zu erhöhen, können auch geringe Mengen an Weichmacher, wie z.B. Dibutylphthalat oder Dimethylphthalat zugesetzt werden. Dabei kann es sich zweckmäßig um Weichmachermengen von 0 - 30 Gew.-% (bezogen auf das Gewicht des Überzugs) handeln. Ein Zusatz von Polyethylenwachs wirkt zusätzlich abdichtend und erhöht den Glanz. Ferner kann die zusätzliche Verwendung eines geeigneten Farbstoffs zweckmäßig sein, um z.B. Schädlingsbekämpfungsmittel mit unterschiedlichem Ausgasungsverhalten gut von einander unterscheiden zu können.

Auch die Phosphorwasserstoff entwickelnde Zusammensetzung kann zusätzlich übliche oder zweckmäßige Zusatzstoffe enthalten, die z.B. als Preßhilfsmittel, als entzündungshemmende Mittel, als Härter ect. wirken können. Dies sind vorzugsweise Harnstoff, Natriumchlorid, mirkokristalline Cellulose, Lactose, ein Stearat; Ammoniumbiphosphat, Natriumbicarbonat, Natriumcarbonat, Ammoniumcarbaminat, Paraffin und/oder Polyethylenglykol vorzugsweise mit einem Molekulargewicht von über 3000.

Erst wenn durch die Reaktion des Phosphides mit dem Wasserdampf eine gewisse Menge Aluminium- bzw. Magnesiumhydroxid gebildet ist, bricht der Überzug von selbst auf. Nachdem dann in kurzer Zeit der Überzug an mehreren Stellen aufgebrochen ist, hat der Wasserdampf freien Zugang zu dem Phosphid und die Ausgasung verläuft von da an nach einem ähnlichen Mechanismus wie bei einem Preßkörper bzw. Pulver nach dem Stande der Technik.

Die Umgebungstemperatur und -feuchtigkeit hat nur einen geringen Einfluß auf den Zeitpunkt des Aufbrechens. Die Menge an freigesetztem Phosphorwasserstoff bis zu diesem Zeitpunkt ist so gering, daß eine völlige Anwendungs- und Handhabungssicherheit gewährleistet ist. Der Verlust an Phosphin bis zum Aufbrechen des Überzugs ist erfindungsgemäß außerordentlich gering. Die Gesamtmenge an verfügbarem Phosphin wird während der gesamten Verzögerungszeit bis zum Beginn der Ausgasung allenfalls um etwa 3%, z.B. zwischen 1 und 2%, reduziert.

Bei bevorzugten Ausführungsformen wird bei Schädlingsbekämpfungsmitteln auf der Basis von Aluminiumphosphid der Ausgasungsvorgang auf mehr als 5 Stunden, beispielsweise auf wenigstens 6 Stunden, vorzugsweise auf einen Zeitraum zwischen 8 Stunden und einigen Tagen, wie z.B. 2 bis 3 Tage verzögert. In besonderen Fällen kann sogar eine Verzögerung der Ausgasung bis zu 3 bis 4 Wochen oder sogar noch länger erzielt werden.

Bei Schädlingsbekämpfungsmittel auf der Basis von Magnesiumphosphid kann die Verzögerungszeit 1 Stunde, insbesondere 3 Stunden übersteigen, ja sogar gewünschtenfalls noch länger sein.

Damit ist sichergestellt, daß die Arbeiter, die die Anwendung des Phosphorwasserstoff entwickelnden Mittels vornehmen, keinerlei bedenklichen Gaskonzentrationen ausgesetzt werden.

Wird der Aufbrechvorgang auf 24 Stunden hinausgezögert, können in dieser Silozellen und Schiffsluken befüllt werden. Preßkörper mit verzögerter Ausgasung können dabei dem einfließenden Getreidestrom beigemischt werden, und es entsteht praktisch keinerlei Gas während des Einfüllvorgangs.

Bei großen Objekten, wie Stahltanks oder Schüttlägern dauert die Befüllung bis zu 7 Tage. Eine vorzeitige Gasentwicklung der dem Getreidestrom zugesetzten Preßkörper würde nicht nur zu einer Gefährdung der Umwelt führen, sondern auch den Begasungserfolg völlig zunichte macen, da normalwerweise diese Preßkörper bzw. Pulver nach 2 bis 3 Tagen völlig ausgegast sind. Deshalb konnten solche Objekte während der Befüllung bisher nicht begast werden.

Mit den erfindungsgemäß überzogenen Preßkörpern bzw. Pulvern gelingt es jedoch, die Ausgasung durch verzögertes Aufbrechen des Überzugs so lange hinauszuzögern, daß jetzt auch solche Begasungen ohne weiteres möglich werden.

Erfingungsgemäß ist es also möglich, beliebige Verzögerungszeiten zwischen einigen Stunden und mehreren Wochen zu erzielen, und die erfindungsgemäßen Schädlingsbekämpfungsmittel den jeweiligen Erfordernissen, die durch die unterschiedlichen Lagerverhältnisse und Praxisbedingungen gegeben sind, anzupassen.

Ein weiterer wesentlicher technischer Fortschritt der erfindungsgemäßen Schädlingsbekämpfungsmittel liegt darin, daß ihre Überzüge unempfindlich gegen flüssiges Wasser sind. Sie sind daher auch für die Anwendung im Freien zur Bekämpfung von schädlichen Nagern besonders geeignet, und zwar beispielsweise von Ratten und Wühlmäusen und auch des in Nordamerika großen Schaden anrichtenden Nagetiers der Gattung Aplodontia. Selbst ein Auslegen im Regen oder bei sehr feuchtem Boden ist möglich, ohne daß es wie bisher zur vorzeitigen Abspaltung von für den Anwender gefährlichen Mengen an Phosphorwasserstoff kommt. Die unerwünschten Selbstentzündungen, die bisher immer wieder bei Schädlingsbekämpfungsmitteln der eingangs genannten Gattung zu beobachten waren, wenn flüssiges Wasser mit leicht hydrolisierbaren Phosphiden zur Reaktion kommt, können bei den erfindungsgemäßen Produkten weitestgehend vermieden werden. Unabhängig von dem Ziel, Schädlingsbekämpfungsmittel mit verzögerter Ausgasung zu schaffen, ist dieses eine weitere Aufgabe der erfindungsgemäßen Schädlingsbekämpfungsmittel.

Unabhängig von dem speziellen Anwendungszweck kann der Überzug z.B. auf den Schädlingsbekämpfungsmitteltabletten bzw. -Pellets aus mehreren verschiedenen Überzugszusammensetzungen bestehen, welche zweckmäßig nacheinander aufgebracht werden. Dabei wird zweckmäßig eine Überzugslösung relativ hoher Konzentration aufgetragen und danach eine oder mehrere weitere Überzugslösungen mit vorzugsweise geringerer Konzentration an filmbildenden Materialien. So kann die zunächst aufgetragene Überzugslösung bis etwa 50 Gew.-%, vorzugsweise zwischen 10 und 24 und insbesondere zwischen 12 und 18 Gew.-%, an filmbildenden Material enthalten, während die Konzentration der 2. Lösung zweckmäßig zwischen 3 und 12 Gew.-%, vorzugsweise zwischen 3 und 8 und insbesondere zwischen 4 und 6 Gew.-%, liegen kann.

Die folgenden Beispiele 1 bis 7 sollen die erfindungsgemäßen Überzugszusammensetzungen näher erläutern, während die Beispiele 8 bis 20 spezielle Verfahren zur Herstellung der Überzüge angeben. Allgemein beziehen sich die Prozentangaben der Komponenten der Überzugszusammensetzungen auf das Gewicht der Preßkörper und sind in Gew.-% angegeben, soweit nichts anderes erwähnt ist. In der Regel werden Pellets mit einem Gewicht von 0,6 g mit dem erfindungsgemäßen Überzug versehen.

| | Gew.-% | Verzögerungszeit bis zum Aufbrechen des Überzuges | bei einer Überzugsdicke von |
|---|---|---|---|
| **Beispiel 1** | | | |
| Acrylsäureester/Metacrylat Copolymer (AMC) | 1,20 | 6-8 Stunden | |
| Magnesiumstearat | 1,20 | | 0,047 mm |
| Weichmacher | 0,12 | | |
| **Beispiel 2** | | | |
| AMC | 0,70 | 8 Stunden | |
| Magnesiumstearat | 1,00 | | 0,042 mm |
| Stearin | 0,50 | | |
| Weichmacher | 0,07 | | |
| **Beispiel 3** | | | |
| AMC | 2,00 | 24 Stunden | |
| Magnesiumstearat | 1,25 | | 0,073 mm |
| Stearin | 0,50 | | |
| Weichmacher | 0,20 | | |
| **Beispiel 4** | | | |
| AMC | 3,50 | 48 Stunden | |
| Magnesiumstearat | 1,50 | | 0,099 mm |
| Weichmacher | 0,35 | | |
| **Beispiel 5** | | | |
| AMC | 4,50 | 7 Tage | |
| Magnesiumstearat | 4,50 | | 0,258 mm |
| Stearin | 4,50 | | |
| Weichmacher | 0,45 | | |
| **Beispiel 6** | | | |
| AMC | 6,00 | 23 Tage | |
| Magnesiumstearat | 6,00 | | 0,333 mm |
| Stearin | 6,00 | | |
| Weichmacher | 0,60 | | |

| | Gew.-% | Verzögerungszeit bis zum Aufbrechen des Überzuges | bei einer Überzugs-dicke von |
|---|---|---|---|
| Beispiel 7 | | | |
| AMC | 6,00 | 20-23 Tage | 0,343 mm |
| Magnesiumstearat | 6,00 | | |
| Cetylalkohol | 6,00 | | |
| Weichmacher | 0,60 | | |

Die in den folgenden Beispielen angegebenen Durchlässigkeitswerte der Überzüge wurden bestimmt, indem ein Überzug von gleichbleibender Dicke und Zusammensetzung auf einem glatt kalandrierten, vliesartigen Kunststoff (HDPE-Vlies, 112 g/$m^2$) von hoher Wasserdampfdurchlässigkeit aufgesprüht wurde; mit Hilfe der Vorrichtung des Verfahrens nach DIN 53 122 (Novemver 1974) wurden die erforderlichen Messungen an dem so überzogenen Vlies vorgenommen. Die Messwerte wurden in g $H_2O/m^2$ (über einen Zeitraum von 24 Stunden) ermittelt.

Beispiel 8:

Aluminiumphosphid-Pellets von Standardgrösse und -zusammensetzung wurden in einer Wirbelschichtapparatur unter Verwendung von Zweistoffdüsen überzogen. Es wurden folgende Überzugslösungen verwendet:

Lösung 1 - 1,0% AMC,1,0% Magnesiumstearat, 0,1% Dibutylphthalat, 0,02% Zapon-Blau, 12,5% Methylenchlorid.

Lösung 2 - 2,0% Stearin, 3,5% AMC, 3,5% Magnesiumstearat, 0,35% Dibutylphthalat, 0,02% Zapon-Blau, gelöst in 80% Methylenchlorid.

Die durch die Wirbelschicht strömende Luft wurde auf etwa 45° bis 55°C gehalten und erreichte nach 15 Minuten bei 54 bis 55°C ein Gleichgewicht; dies entsprach einer Produkttemperatur von etwa 44 bis 46°C. Lösung 1 wurde während der ersten 5 Minuten zugeführt, und die Zuführung von Lösung 2 war nach 34 Minuten beendet. Es folgten 3 Minuten Trocknen bei gleicher Temperatur, worauf die Temperatur auf 25°C gesenkt wurde, bis das Produkt abgekühlt war. Die Pellets trugen einen Überzug von etwa 26,42 mg/$cm^2$, was einer Überzugsdicke von etwa 0,21 mm entsprach. Der Überzug hatte eine Wasserdampfdurchlässigkeit von 115,6 g $H_2O/m^2$. Die Verzögerungszeit betrug etwa 7 Tage.

Beispiel 9:

Die aus der Standard-Aluminiumphosphid-Zusammensetzung hergestellten Tabletten hatten ein Standardgewicht von 3,0 g, einen Durchmesser von 15,7 mm und eine Dicke von 15,4 mm. Ihre kugelförmigen Endflächen waren durch eine zylindrische, etwa 3 mm hohe Seitenfläche getrennt.

Die Beschichtung erfolgte in einem horizontal angeordneten Dragierkessel mit perforierten Wänden zur Zuführung und Ableitung von Luft. Die Lufttemperatur betrug zu Beginn 30°C und wurde allmählich auf etwa 42°C erhöht. In den Kessel, der 10 kg Tabletten enthielt, wurde innerhalb von 175 Minuten die folgende Überzugslösung gesprüht:

900 g Stearin (9,0%), 600 g Magnesiumstearat (6,0%), 300 g AMC (3,0%), 30 g Dibutylphthalat (0,3), gelöst in 8000 g Methylenchlorid.

Es wurde ein Überzug von etwa 88,3 mg/$cm^2$, d.h. eine Überzugsdicke von etwa 0,7 mm, erhalten. Die Verzögerungszeit dieser Tabletten betrug etwa 100 Stunden.

Beispiel 10:

Standard-Aluminiumphosphid-Pellets, die 70% technisches Aluminiumphosid enthielten, wurden in einer Tabletten-Dragiervorrichtung mit folgenden Lösungen (bezogen auf 3 kg Pellets) beschichtet:

Lösung 1 - 30 g AMC (1,0%), 30 g Magnesiumstearat (1,0%), 3 g Dibutylphthalat (0,1%), gelöst in 375 g Methylenchlorid.

Lösung 2 - 75 g (2,5%), 75 g Magnesiumstearat (2,5%), 7,5 g Dibutylphthalat (0,25%), gelöst in 2400 g Methylenchlorid.

Die erste Lösung wurde innerhalb der ersten 7 Minuten in den Kessel gesprüht, worauf 5 Minuten beikleinster Umdrehungszahl getrocknet wurde. Die zweite Lösung wurde innerhalb von 69 Minuten zugeführt, und anschliessend wurde 3 Minuten mit warmer Luft getrocknet und 7 Minuten abgekühlt. Die Überzugsmenge betrug 17 mg/cm$^2$, was einer Überzugsdicke von etwa 0,136 mm entsprach. Die Verzögerungszeit lag zwischen 55 und 70 Stunden.

Beispiel 11:

In einem Tablettendragierkessel wurde 1 kg Standard-Pellets mit folgender Lösung beschichtet: 10 g AMC (1,0%), 15 g Stearin (1,5%), 15 g Magnesiumstearat (1,5%), 1 g Dibutylphthalat (0,1%) 0,1 g Zapon-Blau (0,01%), gelöst in 800 g Methylenchlorid.

Das Einsprühen der Lösung dauerte 27 Minuten; dann wurde 5 Minuten getrocknet, und innerhalb von weiteren 7 Minuten wurden zusätzliche 15 g (1,5%) Magnesiumstearat als Lösung in 200 g Methylenchlorid aufgesprüht. Erhalten wurde eine Überzugsmenge von 9,46 mg/cm$^2$, d.h. eine Überzugsdicke von etwa 0,076 mm. Die Verzögerungszeit betrug etwa 10 bis 12 Stunden.

Beispiel 12:

In einem Tablettendragierkessel wurden 1000 g Standard-Aluminiumphosphid-Pellets mit folgenden Lösungen beschichtet:

Lösung 1 - 15 g AMC (1,5%), 15 g Magnesiumstearat (1,5%), 1,5 g Dibutylphthalat (0,15%), 0,1 g Zapon-Blau (0,01 %), gelöst in 600 g Methylenchlorid.

Lösung 2 - 10 g HPMCP 50 (1,0%), gelöst in 250 g Methanol/Methylenchlorid (30:70).

Die erste Lösung wurde innerhalb von 31 Minuten aufgebracht und anschliessend 5 Minuten getrocknet. Die zweite Lösung wurde innerhalb von 9 Minuten aufgesprüht, worauf 1 Minute mit heisser Luft und 9 Mifnuten mit kalter Luft getrocknet wurde. Die Überzugsmenge betrug insgesamt 9,6 mg/cm$^2$, was einer Überzugsdicke von etwa 0,079 mm entsprach. Die Verzögerungszeit lag bei etwa 5 Stunden.

Beispiel 13:

Es wurden 500 g Standard-Aluminiumphosphid-Pellets in einem Tablettendragierkessel mit folgender Lösung beschichtet:

7,5 g AMC (1,5%), 33,75 g Magnesiumstearat-Dispersion (entspricht 1,5% Magnesiumstearat), 0,75 g Dibutylphthalat (0,15%) und Färbemittel, gelöst in 400 g Methylenchlorid.

Die Lösung wurde mit kleinster Sprühgeschwindigkeit innerhalb von 32 Minuten aufgesprüht und anschliessend 20 Minuten getrocknet. Die erhaltene Überzugsmenge von etwa 7,3 mg/cm$^2$ entsprach einer Überzugsdicke von etwa 0,06 mm. Die Verzögerungszeit betrug 4 bis 5 Stunden.

Beispiel 14:

Das Verfahren des Beispiels 13 wurde wiederholt, wobei anstelle von Magnesiumstearat 1,5% mikrofeines Talkum verwendet wurde. 1 kg der Pellets wurden mit der genannten Substanz beschichtet, die in 800 g Methylenchlorid gelöst bzw. dispergiert waren und innerhalb von 25 Minuten in den Kessel gesprüht wurden. Anschliessend wurde 3 Minuten mit heisser Luft getrocknet und weitere 2 Minuten abgekühlt. Die Überzugsmenge von 7,3 mg/cm$^2$ entsprach einer Überzugsdicke von etwa 0,06 mm. Die Verzögerungszeit betrug 5 bis 6 Stunden.

Beispiel 15:

Aluminiumphosid-Pellets wurden mit einer Lösung von 6,0% AMC, 6,0% Magnesiumstearat, 6,0% Stearin, 0,1% Färbemittel und 81,9% Methylenchlorid (jeweils bezogen auf das Gewicht der Pellets) beschichtet; die Lösung wurde innerhalb von 30 Minuten in den Kessel gesprüht, worauf eine Minute mit heisser Luft und 30 Minuten ohne Luftzufuhr getrocknet wurde.Die Überzugsmenge von 41,5 mg/cm$^2$ entsprach einer Überzugsdicke von etwa 0,33 mm, und die Verzögerungszeit war etwa 20 Tage.

Beispiel 16:

Aluminiumphosphid-Pellets wurden in einem Tablettendragierkessel mit 6,0% AMC, 6,0% Magnesiumstearat, 6,0% Stearinsäure, 0,6% Dibutylpthalat und 81,4% Methylenchlorid beschichtet, wobei wie folgt gearbeitet wurde: 7 Minuten Sprühen, gefolgt von 3 Minuten Trocknen; 5 Minuten Sprühen, gefolgt von 2 Minuten Trocknen mit heisser Luft; 5 Minuten Sprühen, gefolgt von 30 Minuten Trocknen und weiteren 10 Minuten Trocknen mit heisser Luft, während der Kessel mit 60 U/Min rotierte. Die Überzugsmenge von 43 $mg/cm^2$ entsprach einer Überzugsdicke von etwa 0,34 mm. Die Verzögerungszeit betrug etwa 24 Tage.

Beispiel 17:

In einem Tablettendragierkessel wurden 500 g Aluminiumphosphid-Pellets mit einer Lösung von 1,2% AMC, 0,12% Dibutylphthalat und Färbemittel, die auch 1,2% dispergiertes Magnesiumstearat enthielt (jeweils bezogen auf das Gewicht der Pellets) in 400 g Methylenchlorid beschichtet. Die Lösung wurde innerhalb von 28 Minuten in den Kessel gesprüht, worauf 20 Minuten bei kleinster Umdrehungsgeschwindigkeit des Kessels getrocknet wurde.

Die Überzugsmenge von 5,8 $mg/cm^2$ entsprach einer Überzugsdicke von etwa 0,046 mm. Die Wasserdampfdurchlässigkeit des Überzuges betrug 464,2 g $H_2O/m^2$, und die Verzögerungszeit lag zwischen 6 und 8 Stunden.

Beispiel 18:

In einer Wirbelschichtapparatus wurden 6000 g Aluminiumphosphid-Pellets mit folgender Lösung beschichtet: 60,0 g AMC, 90,0 g Stearin, 90,0 g Magnesiumstearat, 6,0g Dibutylphthalat, 0,6 g Zapon-Blau, in 4800 g Methylchlorid. Das Sprühen war nach etwa 34 Minuten beendet, worauf 4 Minuten getrocknet wurde. Die Überzugsmenge von 9,5 $mg/cm^2$ entsprach einer Dicke von etwa 0,076 mm. Die Vorzögerungszeit lag zwischen 6 und 8 Stunden.

Beispiel 19:

In einem Dragierkessel wurden 500 g Pellets mit einem Magnesiumphosphidgehalt von 34 % mit einer Lösung von 17,5 g AMC (3,5%), 17,5 g Magnesiumstearat (3,5%), 1,75 g Dibutylphthalat (0,35%) und 0,05% Zapon-Blau in 400 g Methylenchlorid beschichtet. Die Lösung wurde innerhalb von 8 Minuten in den Kessel gesprüht, worauf 3 Minuten getrocknet wurde. Die Überzugsmenge von 17 $mg/cm^2$ entsprach einer Überzugsdicke von etwa 0,14 mm. Die Verzögerungszeit betrug 2 Stunden (in dieser Zeit hätten unbeschichtete Pellets bereits etwa 1/3 ihres Phosphingehaltes freigesetzt).

Beispiel 20:

In einem Dragierkessel wurde 1 kg Standard-Aluminiumphosphid-Pellets mit folgenden Lösungen beschichtet:

Lösung 1 - 12,5 g HPMCP* (1,25%), gelöst in 125 g Methanol/Methylenchlorid (30:70).

Lösung 2 - 22,5 g HPMCP (2,25%), 0,1 g Zapon-Blau (0,01%), gelöst in 800 g Methanol/Methylenchlorid (30:70).

Lösung 1 wurde innerhalb von 4 Minuten in den Kessel gesprüht, Lösung 2 anschliessend innerhalb von 41 Minuten. Dann wurde 2 Minuten mit heisser Luft getrocknet und 5 Minuten abgekühlt.

Die so erhaltene Überzugsmenge von etwa 8,1 $g/cm^2$ entsprach einer Überzugsdicke von etwa 0,072 mm. Die Verzögerungszeit lag zwischen 15 und 24 Stunden.

**Patentansprüche**

1. Phosphorwasserstoff entwickelndes Schädlingsbekämpfungsmittel auf der Grundlage von Erdalkali- oder Erdmetallphosphiden und gegebenenfalls Zusatzstoffen, das einen festen organischen Polymer-Überzug zur Verzögerung der Ausgasung aufweist, dadurch gekennzeichnet, daß der auf das Schädlingsbekämpfungsmittel in der zu verwendenden Form nachträglich aufgebrachte, gegen flüssiges Wasser unempfindliche Überzug, dar eine Dicke von 0,01 bis 3 mm aufweist, den Phosphorwasserstoff entwickelnden Stoff bzw. die Phosphorwasserstoff entwickelnde Zusammensetzung vollständig umhüllt und daß über die Zusammensetzung und/oder die Dicke des Überzugs dessen Feuchtigkeitsdurchlässigkeit und damit der Zeitpunkt seines Aufbrechens (des Beginns der Ausgasung) geregelt ist.

*Hydroxypropylmethylcellulose phthalate

2. Schädlingsbekämpfungsmittel nach Anspruch 1, dadurch gekennzeichnet, daß es keinerlei Sprengmittel enthält.

3. Schädlingsbekämpfungsmittel nach Anspruch 1 oder 2, dadurch gekennzeichnet, daß das organische Polymer ein Acrylharz, insbesondere ein Polymer auf der Grundlage von Acrylsäure bzw. Acrylsäurederivat(en), wie z.B. ein Acrylsäureester/Methacrylsäureester-Copolymer, insbesondere mit 1 bis 4 Kohlenstoffatomen in der Estergruppe, ist.

4. Schädlingsbekämpfungsmittel nach Anspruch 3, dadurch gekennzeichnet, daß das organische Polymer die folgenden wiederkehrenden Einheiten aufweist:

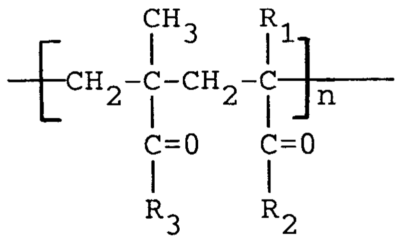

worin $R_1$ Wasserstoff oder $C_{1-4}$-Alkyl, insbesondere Methyl bedeutet, $R_2$ $C_{1-4}$-Alkoxy, insbesondere Methoxy oder Ethoxy ist, $R_3$ Hydroxyl oder eine Alkoxygruppe, die eine tertiäre oder eine quarternäre Ammoniumgruppe mit $C_{1-4}$-Alkylsubstituenten, gegebenenfalls in Form eines Säureadditionssalzes mit einem geeigneten Anion aufweisen kann, repräsentiert und n für einen Wert steht, der dem Copolymer ein mittleres Molekulargewicht von 50.000 bis 500.000 vermittelt.

5. Schädlingsbekämpfungsmittel nach Anspruch 1 oder 2, dadurch gekennzeichnet, daß das organische Polymer ein Styrolharz, insbesondere ein Styrol-Maleinsäureanhydrid-Copolymer, ein Cellulosederivat, insbesondere ein Celluloseester, wie Celluloseacetat, Cellulose-acetat-phthalat und Cellulosemethylphthalat, Polyvinylacetat und/oder Polyvinylacetatphthalat ist.

6. Schädlingsbekämpfungsmittel nach Anspruch 1 oder 2, dadurch gekennzeichnet, daß das organische Polymer Kolophonium, vorzugsweise in Kombination mit einem Antiklebemittel, und/oder eine gegebenenfalls substituierte Alkylcellulose oder deren Ester, z.B. Hydroxypropylmethylcellulose oder das entsprechende Phthalat, gegebenenfalls in Mischung mit Ethylcellulose, ist.

7. Schädlingsbekämpfungsmittel nach Anspruch 1 bis 6, dadurch gekennzeichnet, daß das organische Polymer ein Acrylharz in Kombination mit Stearin oder Cetylalkohol umfaßt, wobei das Verhältnis von Acrylharz zu Stearin oder Cetylalkohol z.B. zwischen 0,5:1 bis 2:1 liegt.

8. Schädlingsbekämpfungsmittel nach Anspruch 1 bis 7, dadurch gekennzeichnet, daß der Überzug zusätzlich Aluminium- oder Magnesiumstearat, ein Polyethylenwachs und/oder einen Weichmacher, insbesondere Dibutylphthalat, oder Dimethylphthalat, enthält.

9. Schädlingsbekämpfungsmittel nach Anspruch 1 bis 8, dadurch gekennzeichnet, daß der Überzug in einer Menge von 1 bis 20 Gew.-%, vorzugsweise von 2,5 bis 15 Gew.-%, bezogen auf das Gesamtgewicht der den Phosphorwasserstoff entwickelnden Zusammensetzung, anwesend ist.

10. Schädlingsbekämpfungsmittel nach Anspruch 1 bis 9, dadurch gekennzeichnet, daß es als Erdalkalioder Erdmetallphosphid Aluminium- oder Magnesiumphosphid enthält.

11. Schädlingsbekämpfungsmittel nach Anspruch 1 bis 10, dadurch gekennzeichnet, daß die Phosphorwasserstoff entwickelnde Zusammensetzung zusätzlich Harnstoff, Natriumchlorid, mikrokristalline Cellulose, Lactose, ein Stearat, Ammoniumbiphosphat, Natriumbicarbonat, Natriumcarbonat, Ammoniumcarbaminat, Paraffin und/oder Polyethylenglykol, vorzugsweise mit einem Molekulargewicht von über 3000, enthält.

12. Schädlingsbekämpfungsmittel nach Anspruch 1 bis 11, dadurch gekennzeichnet, daß der Überzug eine

Dicke von 0,02 bis 2 mm und insbesondere 40 bis 500 µm aufweist.

13. Schädlingsbekämpfungsmittel nach Anspruch 1 bis 12, dadurch gekennzeichnet, daß es als Preßkörper, vorzugsweise von regelmäßiger Form und mit abgerundeten Kanten, oder als ein mit dem Überzug imprägniertes Granulat oder Pulver vorliegt.

14. Verfahren zur Verzögerung des Beginns der Ausgasung von Phosphorwasserstoff-entwickelnden Schädlingsbekämpfungsmitteln auf der Grundlage von Erdalkali- oder Erdmetallphosphiden und gegebenenfalls Zusatzstoffen mit einem Überzug zur Verzögerung der Ausgasung, dadurch gekennzeichnet, daß man das in Form von Preßkörpern, vorzugsweise von regelmäßiger Form und mit abgerundeten Kanten, als Granulat, oder als Pulver vorliegende Schädlingsbekämpfungsmittel nachträglich mit einem 0,01 bis 3 mm dicken, gegen flüssiges Wasser unempfindlichen Überzug aus einem festen, organischen Polymer vollständig umhüllt, wobei man die Feuchtigkeitsdurchlässigkeit des Überzugs und damit den Zeitpunkt seines Aufbrechens (des Beginns der Ausgasung) über dessen Zusammensetzung und/ oder Dicke regelt, und man das Schädlindsbekämpfungsmittel dann in an sich bekannter Weise Ausgasungsbedingungen unterwirft.

15. Verfahren nach Anspruch 14, dadurch gekennzeichnet, daß das Schädlingsbekämpfungsmittel ein wie in irgendeinem der Ansprüche 2 bis 12 definiertes Schädlingsbekämpfungsmittel ist.

16. Verfahren nach Anspruch 14 oder 15, dadurch gekennzeichnet, daß der Überzug durch Sprühen einer Lösung des organischen Materials in einem organischen Lösungsmittel aufgebracht wird, wobei die Preßkörper bis zur Abdampfung des Lösungsmittels in bewegtem Zustand gehalten werden.

17. Verfahren nach Anspruch 16, dadurch gekennzeichnet, daß das Verfahren in einem Wirbelbett durchgeführt wird.

18. Verfahren nach Anspruch 14 bis 17, dadurch gekennzeichnet, daß der Überzug in einem Mehrstufenverfahren aufgebrachtwird, wobei Überzugslösungenverschiedener Konzentration verwendet werden.

19. Verfahren nach Anspruch 18, dadurch gekennzeichnet, daß zunächst eine Überzugslösung mit relativ hoher Konzentration bis etwa 50 Gew.-%, vorzugsweise zwischen 10 und 24 und insbesondere zwischen 12 und 18 Gew.-%, an filmbildendem Material und danach eine zweite Überzugslösung geringer Konzentration, zweckmäßig zwischen 3 und 12 Gew.-%, vorzugsweise zwischen 3 und 8 und insbesondere zwischen 4 und 6 Gew.-%, an filmbildendem Material aufgebracht wird.

**Claims**

1. Hydrogen phosphide developing pest control agents based on alkaline earth or earth metal phosphides and optionally additives, comprising a solid organic polymer coating for retarding the gas generation, characterised in that the coating applied onto the pest control agent, after the latter has been brought into its form for eventual use, and being unaffected by liquid water and having a thickness of 0,01 to 3 mm, envelopes the hydrogen phosphide-generating composition completely and that by way of the composition and/or thickness of the coating the moisture permeability and thereby the time at which it ruptures (the commencement of gas generation) is regulated.

2. Pest control agent according to claim 1, characterised in that it contains no bursting agent whatsoever.

3. Pest control agent according to claim 1 or 2, characterised in that the organic polymer is an acrylic resin, in particular a polymer on the basis of acrylic acid or acrylic acid derivative(s), such as for example an acrylic acid ester/methacrylic acid ester copolymer, in particular having 1 to 4 carbon atoms in the ester group.

4. Pest control agent according to claim 3, characterised in that the organic polymer comprises the following repetitive moieties

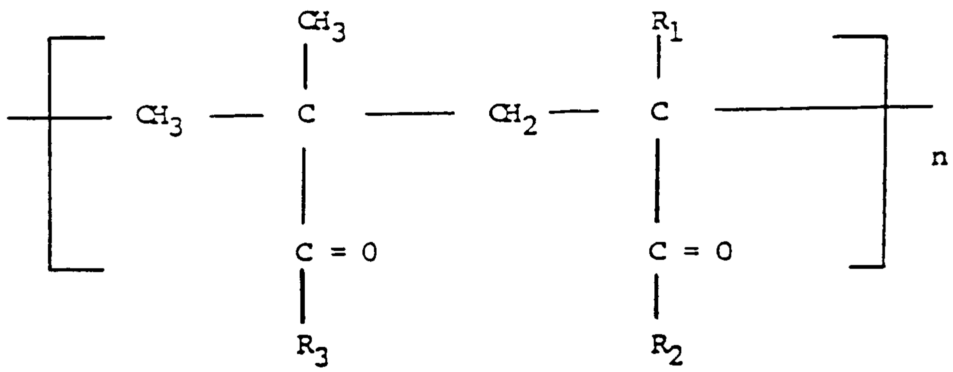

wherein $R_1$ represents hydrogen or an alkyl group having 1 to 4 carbon atoms, in particular methyl, $R_2$ represents a $C_{1-4}$ alkoxy group, in particular methoxy or ethoxy, $R_3$ represents hydroxyl or an alkoxy group, which may comprise a tertiary or a quarternary ammonium group with $C_{1-4}$ alkyl substituents, optionally in the form of an acid addition salt with a suitable anion and n represents a numerical value such that the copolymer has an average molecular mass of 50 000 to 500 000.

**5.** Pest control agent according to any one of claims 1 or 2, characterised in that the organic polymer is a styrene resin, in particular a styrene maleic acid anhydride copolymer, a cellulose derivative, in particular a cellulose ester, such as cellulose acetate, cellulose acetate-phthalate and cellulose methyl phthalate, polyvinyl acetate and/or polyvinyl acetate phthalate.

**6.** Pest control agent according to claim 1 or 2, characterised in that the organic polymer is colophonium, preferably in combination with an anti-adhesive agent, and/or an alkylcellulose or ester thereof, optionally substituted, e.g. hydroxy propylmethyl cellulose or its phthalates, optionally in a mixture with ethyl cellulose.

**7.** Pest control agent according to any one of claims 1 to 6, characterised in that the organic polymer is an acrylic resin in combination with stearin or cetyl alcohol, the ratio of acrylic resin to stearin or cetyl alcohol being e.g. in the range 0,5:1 to 2:1.

**8.** Pest control agent according to any one of claims 1 to 7, characterised in that the coating additionally comprises aluminium stearate or magnesium stearate, a polyethylene wax and/or a plasticiser, in particular dibutyl phthalate or dimethylphthalate.

**9.** Pest control agent according to any one of claims 1 to 8, characterised in that the coating is present in an amount of 1 to 20 mass percent, preferably from 2,5 to 15 mass percent based on the overall mass of the hydrogen phosphide-generating composition.

**10.** Pest control agent according to any one of claims 1 to 9, characterised in that its content of alkaline earth or earth metal phosphide is represented by aluminium phosphide or magnesium phosphide.

**11.** Pest control agent according to any one of claims 1 to 10, characterised in that the hydrogen phosphide developing composition in addition contains urea, sodium chloride, microcrystalline cellulose, lactose, a stearate, ammonium biphosphate, sodium bicarbonate, sodium carbamate, ammonium carbaminate, hard paraffin and/or polyethyleneglycol, preferably having a molecular mass in excess of 3000.

**12.** Pest control agent according to any one of claims 1 to 11, characterised in that the coating has a thickness of 0,02 to 2 mm, and in particular 40 to 500 $\mu$m.

**13.** Pest control agent according to any one of claims 1 to 12, characterised in that it is in the form of a pressed body, preferably of even outlines having rounded edges or as a powder or granulate impregnated with the coating.

**14.** A method for delaying the onset of gas generation of phosphide-generating pest control agents based on alkaline earth or earth metal phosphides and optionally additives with a coating for retarding the gas release, characterised in that the pest control agent, initially provided in the form of pressed bodies, preferably of even shape and having rounded edges, as a granulate or as a powder is thereafter completely enveloped in a solid organic polymer coating, having a thickness of 0,01 to 3 mm and being unaffected by liquid water, the moisture permeability of the coating and thereby the time when it ruptures (the commencement of gas generation) being regulated by way of its composition and/or thickness, whereafter the pest control agent is subjected to gas generation conditions in a manner known per se.

**15.** Method according to claim 14, characterised in that the pest control agent is a pest control agent as defined in any one of claims 2 to 12.

**16.** A method according to claim 14 or 15, characterised in that the coating is applied by spraying of a solution of the organic material in an organic solvent, the pressed bodies being maintained in a state of movement until the solvent is evaporated off.

**17.** A method according to claim 16, characterised in that the method is carried out in a fluidised bed.

**18.** A method according to claims 14 to 17, characterised in that the coating is applied in a succession of stages, wherein coating solutions of different concentrations are used.

**19.** Process according to claim 18, characterised in that initially a coating solution of relatively high concentration up to about 50 mass percent, preferably between 10 and 24, more particularly between 12 and 18 mass percent of filmforming material and thereafter a second coating solution is applied, having a lower concentration, approximately between 3 and 12 mass percent, preferably between 3 and 8 and in particular between 4 and 6 mass percent of filmforming material.

## Revendications

**1.** Pesticide dégageant de l'hydrogène phosphoré à base de phosphures de métaux alcalino-terreux ou de métaux terreux et, éventuellement d'additifs, qui comporte un revêtement polymère organique solide pour retarder la libération de gaz, caractérisé en ce que le revêtement d'une épaisseur de 0,01 à 3 mm, insensible à l'eau liquide, appliqué apres coup sur le pesticide sous la forme à mettre en oeuvre, enrobe entierement la substance dégageant de l'hydrogène phosphoré
ou la composition dégageant de l'hydrogène phosphoré
et que sa permeabilité a l'humidite et de ce fait le moment de sa rupture (le début de la libération de gaz) est réglé par le biais de la composition et/ou de l'épaisseur du revêtement.

**2.** Pesticide selon la revendication 1, caractérisé en ce qu'il ne contient aucun agent de désintégration.

**3.** Pesticide selon la revendication 1 ou 2, caractérisé en ce que le polymère organique est une résine acrylique, en particulier un polymère à base d'acide acrylique ou d'un ou de dérivés de l'acide acrylique, tels que par ex. un copolymère d'ester acrylique/ester méthacrylique, notamment avec 1 à 4 atomes de carbone dans le groupe ester.

**4.** Pesticide selon la revendication 3, caractérisé en ce que le polymère organique comporte les motifs répétitifs suivants :

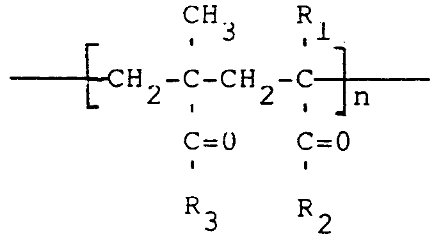

dans lesquels $R_1$ signifie l'hydrogène ou un alkyle en $C_1$-$C_4$, en particulier un méthyle, $R_2$ est un alcoxy en $C_1$-$C_4$, en particulier un méthoxy ou un éthoxy, $R_3$ représente un hydroxyle ou un groupe alcoxy qui peut comporter un groupe ammonium tertiaire ou quaternaire avec des substituants alkyles en $C_1$-$C_4$, éventuellment sous forme d'un sel d'addition d'acide avec un anion approprié et n représente une valeur qui donne au copolymère un poids moléculaire moyen de 50.000 à 500.000.

**5.** Pesticide selon la revendication 1 ou 2, caractérisé en ce que le polymère organique est une résine styrénique, notamment un copolymère styrène-anhydride maléique, un dérivé cellulosique, en particulier un ester cellulosique, tel que l'acétate de cellulose, l'acétophtalate de cellulose et le méthylphtalate de cellulose, un polyacétate de vinyle et/ou un polyacétophtalate de vinyle.

**6.** Pesticide selon la revendication 1 ou 2, caractérisé en ce que le polymère organique est de la colophane, de préférence en combinaison avec un anti-adhésif et/ou une alkylcellulose éventuellement substituée ou ses esters, par exemple de l'hydroxypropylméthylcellulose ou le phtalate correspondant, au besoin en mélange avec de l'éthylcellulose.

**7.** Pesticide selon les revendications 1 à 6, caractérisé en ce que le polymère organique comprend une résine acrylique en association avec de la stéarine ou de l'alcool cétylique, le rapport de résine acrylique à la stéarine ou à l'alcool cétylique se situant par ex. entre 0,5:1 et 2:1.

**8.** Pesticide selon les revendications 1 à 7, caractérisé en ce que le revêtement contient en outre du stéarate d'aluminium ou de magnésium, une cire de polyéthylène et/ou une plastifiant, en particulier du phtalate de dibutyle ou du phtalate de diméthyle.

**9.** Pesticide selon les revendications 1 à 8, caractérisé en ce que le revêtement est présent en une quantite de 1 à 20% en poids, de préférence de 2,5 à 15% en poids par rapport au poids total de la composition dégageant de l'hydrogène phosphoré.

**10.** Pesticide selon les revendications 1 à 9, caracterise en ce qu'il contient du phosphure d'aluminium ou de magnésium en tant que phosphure de métal alcalino-terreux ou de métal terreux.

**11.** Pesticide selon les revendications 1 à 10, caractérisé en ce que la composition dégageant de l'hydrogène phosphoré contient en plus de l'urée, du chlorure de sodium, de la cellulose microcristalline, du lactose, un stéarate, du diphosphate d'ammonium, du bicarbonate de sodium, du carbonate de sodium, du carbamate d'ammonium, de la paraffine et/ou du polyéthylèneglycol, de préférence avec un poids moléculaire supérieur à 3000.

**12.** Pesticide selon les revendications 1 à 11, caractérisé en ce que le revêtement présente une épaisseur de 0,02 à 2 mm et en particulier de 40 a 500 $\mu$m.

**13.** Pesticide selon les revendications 1 à 12, caractérisé, en ce qu'il se présente sous forme de corps pressés, de préférence de forme regulière et avec des bords arrondis, ou sous forme de granulés ou de poudre imprégnés du revêtement.

**14.** Procédé pour retarder le début de la libération de gaz de pesticides dégageant de l'hydrogène phosphoré à base de phosphure de métaux alcalino-terreux ou de métaux terreux et, éventuellement d'additifs, a l'aide d'un revêtement destiné à retarder la libération de gaz, caractérisé en ce qu'on enrobe entièrement apres coup le pesticide présent sous forme de corps pressés, de préférence de forme régulière et avec des bords arrondis, sous forme de granulés ou sous forme de poudre, à l'aide d'un revêtement d'une épaisseur de 0,01 à 3 mm, insensible à l'eau liquide, obtenu à partir d'un polymère organique solide, moyennant quoi on règle la perméabilité à l'humidité du revêtement et par conséquent le moment de sa rupture (du début de la libération de gaz) par le biais de sa composition et/ou de son épaisseur, et qu'on soumet ensuite le pesticide de façon connue en soi a des conditions de libération de gaz.

**15.** Procédé selon la revendication 14, caractérisé en ce que le pesticide est un pesticide tel que défini dans l'une quelconque des revendications 2 à 12.

**16.** Procédé selon la revendication 14 ou 15, caractérisé en ce que le revêtement est appliqué par pulvérisation d'une solution de la matière organique dans un solvant organique, les corps pressés étant maintenus en mouvement jusqu'à évaporation du solvant.

**17.** Procédé selon la revendication 15, caractérisé en ce que le procédé est réalisé dans un lit fluidise.

**18.** Procédé selon les revendications 14 à 17, caractérisé en ce que le revêtement est appliqué selon un procédé en plusieurs stades, auquel cas on utilise des solutions de revêtement à concentration différente.

**19.** Procédé selon la revendication 18, caractérisé en ce qu'on applique tout d'abord une solution de revêtement avec une concentration relativement élevée en matière filmogène jusqu'à environ 50% en poids, de préférence entre 10 et 24 et en particulier entre 12 et 18% en poids et ensuite une deuxième solution de revêtement de concentration plus faible en matière filmogène, de manière appropriée entre 3 et 12% en poids, de préférence entre 3 et 8 et en particulier entre 4 et 6% en poids.